# DEMANDE DE BREVET EUROPEEN

(11) **EP 2 676 858 A1**
(43) Date de publication de la demande: **25.12.2013**
(21) Numéro de dépôt: 13003138.8
(22) Date de dépôt: 20.06.2013
(51) Int. Cl.: B61D 17/02

(54) **Structure de caisse de véhicule ferroviaire à écoulement d'air sous caisse amélioré**

(30) Priorité: 22.06.2012 FR 1201772
(71) Demandeur: Société Nationale des Chemins de Fer Français - SNCF, 75014 Paris (FR)
(72) Inventeur: Paradot, Nicolas, 91400 Orsay (FR); Allain, Eliane, 92120 Montrouge (FR); Loizeau, Thierry, 72650 LA Chapelle Saint Aubin (FR); Poisson, Franck, 72100 LE Mans (FR)
(74) Mandataire: Delaveau, Sophie

(57) **Abrégé**

L'invention porte principalement sur une structure de caisse de véhicule ferroviaire destiné à circuler sur une voie ferrée pour laquelle l'écartement des deux files de rails parallèles est maintenue constant par des traverses et qui est essentiellement caractérisé en ce que la face inférieure (1) de la structure de caisse (2) en regard de la voie ferrée comporte une série de déflecteurs (5,5a,5b) qui s'étendent à proximité de la dite face inférieure (1).

## Description

L'invention concerne principalement une structure de caisse de véhicule ferroviaire permettant de contrôler le flux d'air circulant sous cette structure de caisse lorsque le véhicule est en mouvement.

La circulation des véhicules ferroviaires provoque un écoulement d'air entre le sol et la face inférieure de la structure de caisse qui s'étend entre deux bogies consécutifs.

Cet écoulement d'air est fortement perturbé par la nature du sol constitué par l'alternance du ballast et des traverses qui maintiennent parallèles les deux files de rails, les traverses étant plus haute que le ballast. Ce phénomène est connu sous le nom de travelage sous caisse de véhicule ferroviaire.

Au delà d'une certaine vitesse de circulation du train, cette configuration génère une surpression sur la face inférieure de la structure de caisse à une fréquence égale à la vitesse du train divisée par la distance d'espacement entre les traverses. Cette surpression sollicite la face inférieure de la structure de caisse qui vibre à la fréquence d'excitation et qui crée un bourdonnement audible à l'intérieur du véhicule ferroviaire.

Ce phénomène est particulièrement observé dans des véhicules ferroviaires à deux niveaux pour lesquels la distance entre la structure de caisse et le sol est plus faible que dans le cas d'un véhicule ferroviaire à un seul niveau, et en raison du fait que l'amplitude du bourdonnement dépend de la vitesse du train et de la distance entre la face inférieure de la structure de caisse et le sol.

Ce phénomène a été constaté par la demanderesse pour un Train à Grande Vitesse à deux niveaux. Il est perçu à l'intérieur des salles voyageur du niveau inférieur à partir d'une vitesse de 320 km par heure.

Il a été proposé pour diminuer ce phénomène, d'améliorer l'isolation de la structure de caisse par rapport au sol. Mais de façon connue dans le domaine de l'acoustique, le phénomène de bourdonnement génère une émergence fréquentielle en basses fréquences de l'ordre de 140 Hertz de sorte que cette solution d'isolation ne permet pas de réduire efficacement le bourdonnement audible depuis l'intérieur du véhicule ferroviaire.

Dans ce contexte, la présente invention vise une structure de caisse qui permet d'éviter, ou à tout le moins de limiter, le bourdonnement audible depuis l'intérieur du véhicule ferroviaire et provenant de l'écoulement d'air entre le sol et la face inférieure de la structure de caisse lors de la circulation du véhicule ferroviaire à grande vitesse.

A cet effet, la structure de caisse de l'invention est essentiellement **caractérisée en ce que** sa face inférieure en regard de la voie ferrée comporte une série de déflecteurs qui s'étendent à proximité de la dite face inférieure.

La structure de caisse de l'invention peut également comporter les caractéristiques optionnelles suivantes considérées isolément ou selon toutes les combinaisons techniques possibles :
- les déflecteurs sont régulièrement disposés le long d'au moins une partie de la face inférieure de la structure de caisse.
- la périodicité des déflecteurs est proportionnelle à la distance d'espacement des traverses.
- l'espacement entre deux déflecteurs adjacents correspond à la distance d'espacement des traverses.
- chaque déflecteur présente une asymétrie transversale, la série de déflecteurs comporte une première partie qui s'étend depuis un premier bogie et pour laquelle les déflecteurs présentent une première orientation, et une seconde partie qui s'étend depuis le bogie de l'extrémité opposé de la structure de caisse, et pour laquelle les déflecteurs présentent une seconde orientation, et les première et seconde orientations des déflecteurs sont symétriques l'une par rapport à l'autre et choisies ne pas briser la symétrie transversale de l'écoulement d'air dans les première et seconde parties selon le sens de circulation du véhicule ferroviaire. - les première et seconde orientations des déflecteurs des première et seconde parties sont symétriques par rapport à un axe transversal situé à mi-distance de la longueur de la structure de caisse.
- chaque déflecteur est une barrette droite s'étendant obliquement sur toute la largeur de la face inférieure de la structure de caisse.
- chaque déflecteur présente une symétrie longitudinale.
- chaque déflecteur présente la forme d'un chevron orienté longitudinalement qui s'étend transversalement sur toute la largeur de la face inférieure de la structure de caisse.
- chaque déflecteur présente une symétrie transversale et la série de déflecteurs s'étend au niveau de la face inférieure de la structure de caisse depuis le premier bogie jusqu'au bogie de l'extrémité opposé de la structure de caisse.
- chaque déflecteur présente la forme d'un chevron orienté transversalement et qui s'étend sur toute la largeur de la face inférieure de la structure de caisse et dont la largeur correspond à deux fois la distance d'espacement des traverses.
- chaque déflecteur présente une épaisseur inférieure à 5 millimètres, de préférence de 3 millimètres.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique en perspective d'une partie de la face inférieure de la structure de caisse de l'invention située en regard des traverses de la voie de chemin de fer selon une première variante de l'invention,
- la figure 2 est une représentation schématique de dessus de la face inférieure de la structure de caisse de l'invention selon la première variante de l'invention,
- la figure 3 est une représentation schématique de dessus de la face inférieure de la structure de caisse de l'invention selon une deuxième variante de l'invention, et
- la figure 4 est une représentation schématique de dessus de la face inférieure de la structure de caisse de l'invention selon une troisième variante de l'invention.

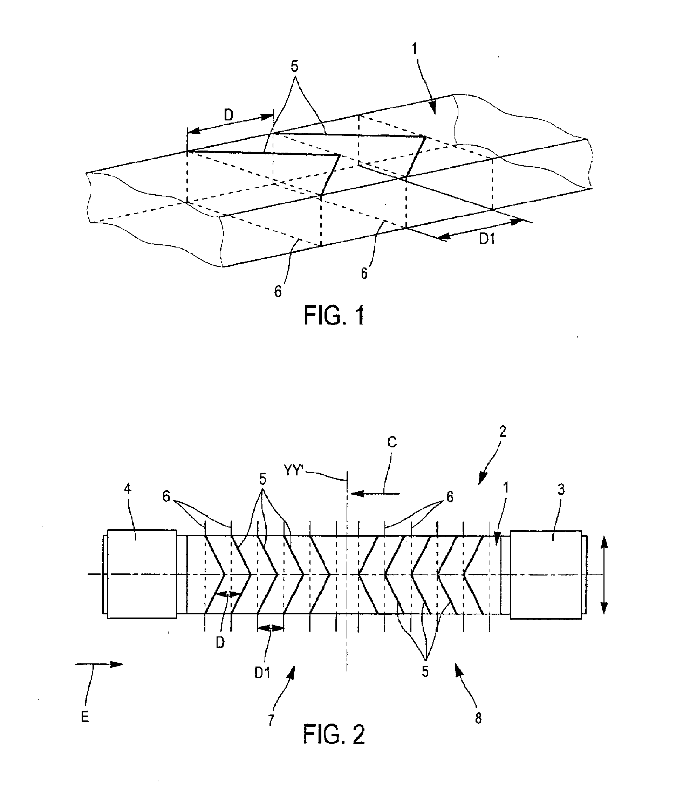

En référence aux figures 1 et 2 et selon une première variante, la face inférieure 1 de la structure de caisse 2 qui s'étend entre deux bogies consécutifs 3,4 comporte une série de déflecteurs 5 solidaires de la dite face inférieure 1.

Chaque déflecteur 5 présente la forme d'un chevron orienté longitudinalement qui s'étend sur toute la largeur de la face inférieure 1 de la structure de caisse 2.

La distance D entre chaque chevron 5 correspond à la distance d'écartement D1 entre deux traverses consécutives 6.

Par ailleurs, la série de déflecteurs 5 comporte une première partie 7 pour laquelle les déflecteurs 5 en chevron présentent une première orientation et une seconde partie 8 pour laquelle les déflecteurs 5 en chevron présentent une seconde orientation symétrique de la première orientation des déflecteurs 5 de la première partie 8.

Les première 7 et deuxième 8 parties de la série de déflecteurs 5 sont symétriques par rapport à un axe transversal YY' situé à mi-distance de la longueur de la structure de caisse 2.

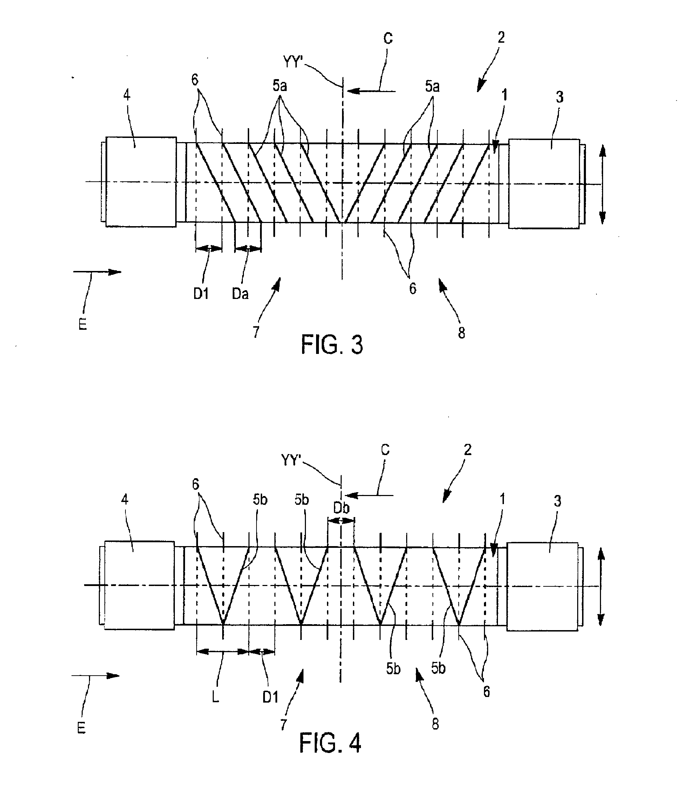

En référence à la figure 3 et selon une deuxième variante, la face inférieure 1 de la structure de caisse 2 qui s'étend entre deux bogies consécutifs 3,4 comporte également une série de déflecteurs 5a solidaire de la dite face inférieure 1.

Chaque déflecteur 5a présente la forme d'une barrette rectiligne qui s'étend obliquement sur toute la largeur de la face inférieure 1 de la structure de caisse 2.

La distance Da entre chaque barrette rectiligne 5a correspond à la distance d'écartement D1 entre deux traverses consécutives 6.

Par ailleurs, la série de déflecteurs 5a comporte une première partie 7 pour laquelle les déflecteurs 5a sous forme de barrette oblique présentent une première orientation et une seconde partie 8 pour laquelle les déflecteurs 5a sous forme de barrette oblique également présentent une seconde orientation symétrique de la première orientation des déflecteurs 5a de la première partie 8.

Les première 7 et deuxième 8 parties de la série de déflecteurs 5a sont symétriques par rapport un axe transversal YY' situé à mi-distance de la longueur de la structure de caisse 2.

En référence à la figure 4 et selon une troisième variante, la face inférieure 1 de la structure de caisse 2 qui s'étend entre deux bogies consécutifs 3,4 comporte également une série de déflecteurs 5b solidaires de la dite face inférieure 1.

Chaque déflecteur 5b présente la forme d'un chevron orienté transversalement qui s'étend sur toute la largeur de la face inférieure 1 de la structure de caisse 2.

La distance Db entre chaque déflecteur 5b correspond à la distance d'écartement D1 entre deux traverses consécutives 6 tandis que la largeur L de chaque déflecteur 5b correspond à deux fois la distance d'écartement D1 entre deux traverses consécutives 6.

Pour les trois variantes précédemment décrites, chaque déflecteur présente une largeur d'environ 14 millimètres, et une épaisseur de 3 millimètres.

La faible épaisseur des déflecteurs 5,5a,5b permet de générer une perturbation de faible envergure. Il a été en effet découvert par la demanderesse qu'une perturbation trop importante ne permet pas de réduire le phénomène de bourdonnement. Par ailleurs, cette faible épaisseur permet également de ne pas augmenter la résistance du véhicule ferroviaire lors de sa circulation.

En outre, la correspondance entre l'espacement D,Da,Db entre chaque déflecteurs 5,5a,5b et la distance d'écartement D1 entre deux traverses consécutives 6, permet d'améliorer plus encore la diminution du phénomène de bourdonnement. Cette amélioration peut s'étendre plus généralement à ce que la périodicité des déflecteurs 5,5a,5b est proportionnelle à la distance d'écartement D1 entre deux traverses consécutives 6. On pourrait à ce titre par exemple prévoir à titre de variante entrant dans le cadre de l'invention que l'espacement entre chaque déflecteur 5,5a,5b corresponde à deux fois la distance d'écartement D1 entre deux traverses consécutives.

Pour les première et seconde variantes, chaque déflecteur 5,5a présente une asymétrie transversale propre. Par conséquent, l'orientation des déflecteurs 5,5a au niveau de la première partie 7 sera différente de l'orientation des déflecteurs 5,5a de la seconde partie 8. Par ailleurs, ces orientations respectives au niveau des première 7 et seconde 8 parties sont choisies pour ne pas briser la symétrie transversale de l'écoulement d'air qui se fait selon la flèche E lorsque le véhicule ferroviaire est en circulation selon la flèche C.

Quant à la symétrie des première 7 et deuxième 8 parties par rapport l'axe transversal YY' situé à mi-distance de la longueur de la structure de caisse 2, cette symétrie permet de pouvoir adapter la structure de caisse de l'invention selon le sens de circulation du véhicule ferroviaire.

En qui concerne plus particulièrement la première variante, les chevrons 5 présentent en outre intrinsèquement une symétrie longitudinale qui permet d'améliorer l'aérodynamisme de la série de déflecteurs 5.

Pour la troisième variante, les déflecteurs 5b présentent une symétrie transversale propre de sorte qu'une modification de l'orientation des déflecteurs 5b selon que ces derniers se trouvent au niveau de la première 7 ou seconde 8 partie n'est pas requise. La symétrie selon l'axe transversale médian YY' sera néanmoins également présente de par la symétrie transversale propre de chaque déflecteur 5b.

Les déflecteurs 5,5a,5b des trois variantes de réalisation sont solidarisés à la face inférieure 1 de la structure de caisse 2 par tout moyen connu de l'homme du métier, par exemple par boulonnage. Par ailleurs, les déflecteurs 5, 5a,5b sont solidarisés à la partie de la face inférieure 1 de la structure de caisse 2 qui présente une surface lisse. Par conséquent, le nombre de déflecteurs 5,5a,5b dépendra de la longueur de la surface lisse de la face inférieure 1 de la structure de caisse 2.

Les trois variantes précédemment décrites sont données à titre indicatif. L'homme du métier est en mesure de modifier la géométrie des déflecteurs tout en restant dans le cadre de l'invention.

## Revendications

1. Structure de caisse de véhicule ferroviaire destiné à circuler sur une voie ferrée pour laquelle l'écartement des deux files de rails parallèles est maintenue constant par des traverses, **caractérisée en ce que** la face inférieure (1) de la structure de caisse (2) en regard de la voie ferrée comporte une série de déflecteurs (5,5a,5b) qui s'étendent à proximité de la dite face inférieure (1) en étant répartis longitudinalement le long de la dite face inférieure (1) de la structure de caisse (2).

2. Structure de caisse de véhicule ferroviaire selon la revendication 1, **caractérisée en ce que** les déflecteurs (5,5a,5b) sont régulièrement disposés le long d'au moins une partie de la face inférieure (1) de la structure de caisse (2).

3. Structure de caisse de véhicule ferroviaire selon la revendication 2, **caractérisée en ce que** la périodicité des déflecteurs (5,5a,5b) est proportionnelle à la distance (D1) d'espacement des traverses (6) destinées à faire face aux dits déflecteurs (5,5a,5b).

4. Structure de caisse selon la revendication 3, **caractérisée en ce que** l'espacement (D,Da,Db) entre deux déflecteurs adjacents (5a) correspond à la distance (D1) d'espacement des traverses (6) destinées à faire face aux dits déflecteurs (5,5a,5b).

5. Structure de caisse de véhicule ferroviaire selon l'une quelconque des revendications 2 à 4, **caractérisée en ce que** chaque déflecteur (5,5a) présente une asymétrie transversale, **en ce que** la série de déflecteurs (5,5a) comporte une première partie (7) qui s'étend depuis un premier bogie (4) et pour laquelle les déflecteurs (5,5a) présentent une première orientation, et une seconde partie (8) qui s'étend depuis le bogie (3) de l'extrémité opposé de la structure de caisse (2), et pour laquelle les déflecteurs (5,5a) présentent une seconde orientation, et **en ce que** les première et seconde orientations des déflecteurs (5,5a) sont symétriques l'une par rapport à l'autre et choisies ne pas briser la symétrie transversale de l'écoulement d'air dans les première (7) et seconde (8) parties selon le sens de circulation (C) du véhicule ferroviaire.

6. Structure de caisse de véhicule ferroviaire selon la revendication 5, **caractérisée en ce que** les première et seconde orientations des déflecteurs (5,5a) des première (7) et seconde (8) parties sont symétriques par rapport à un axe transversal (YY') situé à mi-distance de la longueur de la structure de caisse (2).

7. Structure de caisse de véhicule ferroviaire selon l'une quelconque des revendications 5 et 6, **caractérisée en ce que** chaque déflecteur (5a) est une barrette droite s'étendant obliquement sur toute la largeur de la face inférieure (1) de la structure de caisse (2).

8. Structure de caisse de véhicule ferroviaire selon l'une quelconque des revendications 5 et 6, **caractérisée en ce que** chaque déflecteur (5) présente une symétrie longitudinale.

9. Structure de caisse de véhicule ferroviaire selon la revendication 8, **caractérisée en ce que** chaque déflecteur (5) présente la forme d'un chevron (5) orienté longitudinalement qui s'étend transversalement sur toute la largeur de la face inférieure (1) de la structure de caisse (2).

10. Structure de caisse de véhicule ferroviaire selon l'une quelconque des revendications 1 à 4, **caractérisée en ce que** chaque déflecteur (5b) présente une symétrie transversale et **en ce que** la série de déflecteurs (5b) s'étend au niveau de la face inférieure (1) de la structure de caisse (2) depuis le premier bogie (4) jusqu'au bogie (3) de l'extrémité opposé de la structure de caisse (2).

11. Structure de caisse de véhicule ferroviaire selon la revendication 10, **caractérisée en ce que** chaque déflecteur (5b) présente la forme d'un chevron (5b) orienté transversalement et qui s'étend sur toute la largeur de la face inférieure (1) de la structure de caisse (2) et dont la largeur correspond à deux fois la distance (D1) d'espacement des traverses (6).

12. Structure de caisse selon l'une quelconque des revendications précédentes, **caractérisée en ce que** chaque déflecteur (5,5a,5b) présente une épaisseur inférieure à 5 millimètres, de préférence de 3 millimètres.
